# DEMANDE DE BREVET EUROPEEN

(11) **EP 2 395 559 A1**
(43) Date de publication de la demande: **14.12.2011**
(21) Numéro de dépôt: 11004720.6
(22) Date de dépôt: 09.06.2011
(51) Int. Cl.: H01L 31/048, E04D 13/18, F24J 2/52

(54) **Dispositif de couverture de toit à panneaux solaires**

(30) Priorité: 10.06.2010 FR 1002451; 10.06.2010 FR 1002447
(71) Demandeur: Tube Profil Equipement - Ets Jean Miniscloux, 28630 Le Coudray (FR)
(72) Inventeur: Miniscloux, Francis, 28600 Luisant (FR); Miniscloux, Glenn, 28000 Chartres (FR)
(74) Mandataire: Thibon-Littaye, Annick

(57) **Abrégé**

L'invention concerne un dispositif de couverture à capteur solaire caractérisé en ce qu'il comporte une tôle nervurée qui présente une série de nervures longitudinales en saillie d'un plan de base, ainsi qu'une plaque de capteur solaire qui s'étend au-dessus de ladite tôle nervurée.

Deux nervures de recouvrement sont disposées sur les bords de la tôle, deux nervures de support sont disposées entre les nervures de recouvrement et au moins une nervure de rigidification est disposée entre les nervures de support.

La plaque de capteur solaire repose sur les nervures de support, qui s'étendent en saillie de façon proéminente par rapport aux autres nervures de la tôle et qui forment une surface de fixation de la plaque par collage.

## Description

On connaît des panneaux solaires qui sont formés d'une plaque à conversion photovoltaïque et d'un cadre adapté à d'une part supporter la plaque de capteur et d'autre part assurer la fixation du panneau sur une structure de toit. Le cadre a également pour fonction d'assurer une évacuation de la chaleur pour optimiser le rendement du capteur. Les panneaux solaires de ce type sont rapportés sur un élément de toiture, et par exemple sur une tôle présentant des nervures de renforcement. On observe toutefois que la présence de ce cadre présente l'inconvénient de rendre l'ensemble particulièrement lourd.

Dans ce contexte, l'invention propose un dispositif de couverture à capteur solaire qui soit plus léger et moins encombrant que précédemment, tout en assurant la fixation du capteur d'une manière qui soit efficace en prévention de la surchauffe de celui-ci. Le dispositif de couverture est caractérisé en ce qu'il comporte un élément de toiture réalisé sous la forme d'une tôle nervurée qui présente une série de nervures longitudinales en saillie d'un plan de base de la tôle, ainsi qu'une plaque de capteur solaire qui s'étend au-dessus de ladite tôle nervurée. Deux nervures de recouvrement sont disposées sur les bords de la tôle et deux nervures de support sont disposées entre les nervures de recouvrement. Au moins une nervure de rigidification est disposée entre les nervures de support, qui s'étendent en saillie de façon proéminente par rapport aux autres nervures de la tôle. La plaque de capteur solaire repose sur les nervures de support qui forment une surface de fixation de la plaque par collage, de telle sorte que la plaque s'étend à distance des autres nervures.

Le fait que la plaque de capteur solaire repose sur des nervures surélevées par rapport au reste des nervures permet d'assurer un refroidissement efficace de cette plaque, ce qui évite une perte de rendement énergétique dû à la surchauffe de la plaque, alors que selon l'invention cette plaque est collée directement en appui sur les nervures de support de la tôle nervurée sans l'intermédiaire d'un cadre de panneau solaire. Les formes et l'agencement des nervures de renforcement d'une tôle classiques ont été ainsi modifiés pour que la plaque de capteur puisse reposer sur des nervures surélevées, pour que des nervures de recouvrement soient adaptées à permettre la mise en position d'un dispositif à côté d'un autre, et pour que des nervures de rigidification rigidifient l'ensemble entre les nervures de support.

Selon d'autres caractéristiques de l'invention, chaque nervure de support est formée de flancs montants en saillie du plan de base de la tôle et d'une paroi transversale qui s'étend parallèlement au plan de base entre les extrémités en saillie des flancs montants. La face supérieure de cette paroi transversale présente une empreinte transversale en creux. La plaque de capteur solaire se monte raccordée à un circuit électrique de manière à transformer le rayonnement solaire reçu sur la plaque en de l'énergie électrique. Un boîtier de câblage est à cet effet disposé sous la plaque, pour contenir les éléments de raccordement des câbles électriques audit circuit électrique. L'empreinte transversale présente une profondeur et une largeur adaptées à livrer passage aux câbles électriques associés à la plaque de capteur solaire. Ainsi, on prévoit un passage pour que le câble électrique raccordé au boîtier de câblage puisse traverser une nervure de support.

Selon des caractéristiques de l'invention, l'empreinte présente, sur toute la largeur de la nervure de support, une section comportant un fond sphérique et des parois verticales. Le fond sphérique de l'empreinte présente un rayon de courbure équivalent au rayon du câble, la largeur de l'empreinte est égale au diamètre du câble et la hauteur des parois verticales montantes est égale au rayon du câble. Ainsi, l'empreinte offre un logement sur mesure au câble, de manière d'une part à ce que celui-ci ne déborde pas de l'empreinte pour ne pas gêner l'appui de la plaque solaire sur les nervures de support, et d'autre part à ce que le câble ne puisse se déplacer dans l'empreinte.

Selon des caractéristiques de l'invention, chaque nervure de recouvrement comporte une paroi montante qui fait saillie du plan de base de la tôle jusqu'à une paroi de recouvrement qui s'étend parallèlement au plan de base dans la continuité du sommet de la paroi montante et dont l'extrémité libre est rabattue. Une première nervure de recouvrement est disposée à une extrémité latérale de la tôle et une deuxième nervure de recouvrement est disposée à l'extrémité latérale opposée de la tôle, la paroi montante de la première nervure s'étendant en saillie plus loin du plan de base de la tôle que la paroi montante de la deuxième nervure. Ainsi, lorsque plusieurs dispositifs sont disposés :côte à côte pour réaliser une couverture de toit plus étendue, les parois de recouvrement en regard de deux dispositifs peuvent se superposer.

Selon une caractéristique de l'invention, le dispositif comporte une chambre d'aération délimitée latéralement par les deux nervures de support de la tôle et verticalement par le plan de base de la tôle et par la plaque de capteur solaire.

L'invention concerne également un mode de réalisation dans lequel des moyens élévateurs sont fixés sur des faces supérieures des ondes en saillie de la tôle nervurée, la plaque de capteur solaire étant dès lors collée directement sur ces moyens élévateurs simultanément au collage sur les nervures de support. Selon une caractéristique importante, les moyens élévateurs sont conformés pour laisser passage, de l'une à l'autre des plages planes adjacentes, à de l'air en circulation sous la plaque de capteur solaire ainsi qu'aux câbles électriques lorsque de tels câbles s'étendent entre la tôle nervurée et ladite plaque pour raccorder la plaque de capteur à un circuit électrique.

Les moyens élévateurs selon l'invention peuvent prendre la forme de cales profilées en longueur ajourées en Oméga, qui s'étendent parallèlement aux ondes de la tôle nervurée.L'invention concerne également un ensemble de couverture de toit par des plaques solaires caractérisé en ce qu'il comporte un premier dispositif de couverture et un deuxième dispositif de couverture contigus, chaque dispositif de couverture comportant une tôle nervurée comportant au moins deux nervures de support et à ses extrémités latérales des nervures de recouvrement, avec les nervures de support surélevées par rapport aux nervures de recouvrement et sur lesquelles est collée une plaque solaire, les formes des nervures de recouvrement étant adaptées à ce qu'une première nervure de recouvrement du deuxième dispositif de couverture se superpose à une deuxième nervure de recouvrement du premier dispositif de couverture.

Selon une caractéristique de l'invention, un espace est aménagé entre deux plaques de capteur solaire contiguës pour abcéder aux nervures de recouvrement.

D'autres caractéristiques et avantages de l'invention ressortiront plus précisément de la description qui suit, description illustrée par les figures suivantes :
la figure 1, qui est une vue en élévation d'un dispositif de couverture de toit selon un premier mode de réalisation de l'invention, avec une tôle nervurée et une plaque de capteur solaire qui repose sur des nervures de support de la tôle, un deuxième dispositif de couverture voisin dans le sens de la hauteur étant représenté en traits pointillés ;
- la figure 2, qui est une vue en coupe suivant le plan repéré Il-Il sur la figure 1, avec deux dispositifs de couvertures voisins latéralement se superposant au niveau d'une de leur nervure de recouvrement ;
- la figure 3, qui est une vue en perspective d'une partie de la tôle illustrée à la figure 2, avec une nervure de support qui présente une empreinte transversale;
- la figure 4, qui est une vue en perspective de la tôle illustrée à la figure 3 avec la plaque de capteur solaire rapportée sur la nervure de support et un câble électrique qui s'étend entre la tôle et la plaque, logé dans l'empreinte;
- et la figure 5, qui est une vue en coupe, semblable à la figure 2, d'un dispositif de couverture de toit selon un deuxième mode de réalisation de l'invention, avec une tôle nervurée et une plaque de capteur solaire qui repose en outre sur des moyens élévateurs ajourés rapportés sur des nervures de la tôle.

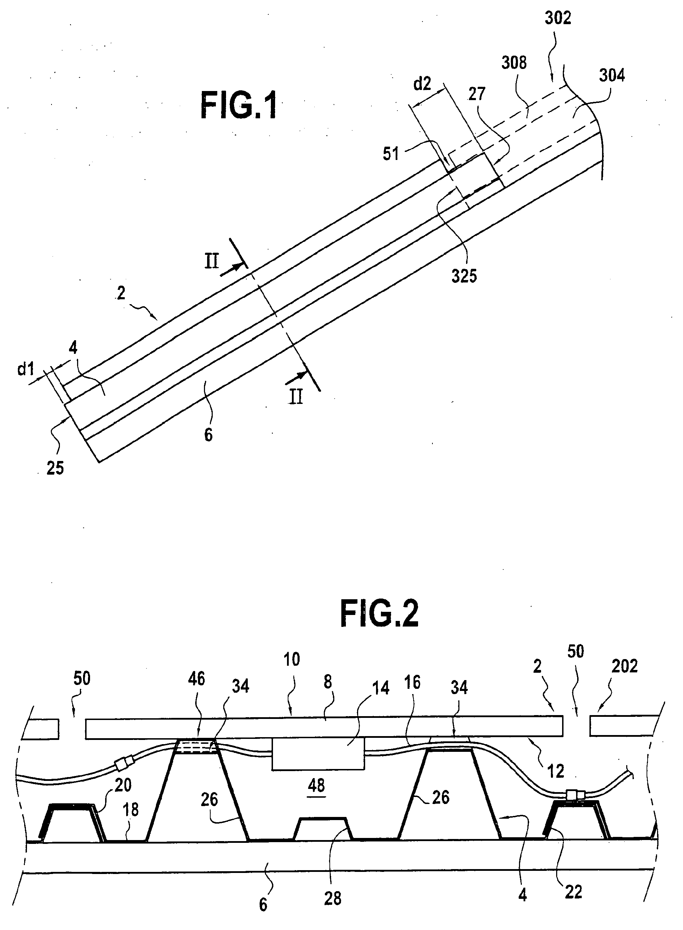

Comme illustré sur les figures 1 à 4, dans un premier mode de réalisation de l'invention, un dispositif de couverture d'un toit 2 comporte une tôle nervurée 4 qui s'étend sur la structure du toit 6 et une plaque de capteur solaire 8 disposée au-dessus de la tôle nervurée et collée directement sur des nervures de la tôle.

La plaque de capteur solaire est un module photovoltaïque plan, dont la face supérieure 10 est orientée à l'opposée de la structure du toit; pour recevoir les rayons du soleil, et dont la face inférieure 12 est collée sur des nervures de la tôle.

Selon les besoins en énergie de l'utilisateur, un seul dispositif peut être mis en place sur une structure de toit, de sorte qu'une seule plaque capte l'énergie solaire, ou plusieurs dispositifs équivalents peuvent être juxtaposés et reliés les uns aux autres pour former un ensemble de couverture du toit par des capteurs solaires qui soit de plus grande taille.

On observe que selon l'invention, chaque plaque de capteur solaire est disposée directement sur la tôle nervurée sans la présence d'un cadre de panneau solaire, comme c'est le cas dans des panneaux solaires classiques qui sont formés d'une plaque rapportée sur un cadre.

La plaque de capteur solaire est raccordée à un circuit électrique de manière à transformer le rayonnement solaire reçu sur la plaque en de l'énergie électrique. A cet effet, un boîtier de câblage 14 (visible sur la figure 2) est disposé sous la plaque, solidarisé à la face inférieure de la plaque. Il est apte à recevoir tous les éléments de circuit électrique nécessaires pour raccorder des câbles électriques 16, soit au circuit extérieur d'exploitation du courant produit par conversion photovoltaïque à partir du rayonnement solaire, soit à un boîtier correspondant d'une plaque solaire contiguë.

La tôle nervurée comporte une série de nervures longitudinales faisant saillie au-dessus du plan de base 18 et qui s'étendent d'une extrémité 25 de la tôle à l'extrémité opposée 27. La série de nervures longitudinales est formée de deux nervures d'extrémité 20 et 22, qui sont disposées respectivement à une extrémité latérale de la tôle 24 pour former des nervures de recouvrement d'une tôle voisine lors d'un assemblage, de deux nervures de support 26 qui s'étendent entre les nervures de recouvrement, et d'au moins une nervure de rigidification 28 qui s'étend entre les nervures de support.

La tôle est ici en aluminium, ce qui permet un gain de poids de l'ensemble et qui assure un refroidissement plus rapide de la tôle et donc de la plaque de capteur solaire qu'elle supporte.

Les nervures de support présentent des flancs montants 29 qui prolongent sensiblement verticalement le plan de base de la tôle et une paroi transversale 30 qui s'étend entre.les extrémités en saillie des flancs montants. Comme illustré sur les figures, les flancs montants peuvent être inclinés par rapport à un angle droit avec le plan de base, mais il sera compris que le degré d'inclinaison peut varier sans sortir du contexte de l'invention, dès lors que les parois transversales des nervures de support sont planes et comprises dans un même plan, pour que les faces supérieures des parois transversales forment une surface d'appui pour une plaque de capteur solaire.

Les nervures de rigidification sont disposées entre les nervures de support. Comme illustré, ces nervures de rigidification peuvent présenter une forme similaire à celle des nervures de support avec des flancs montants et une extrémité supérieure plane 32 ou bien présenter une forme ondulée.

Les nervures de support et de rigidification diffèrent ici en ce que la hauteur des nervures de support est plus importante que la hauteur des nervures de rigidification de sorte que les parois transversales des nervures de support 30 sont situées dans un plan plus éloigné du plan de base de la tôle que le plan comprenant l'extrémité supérieure des nervures de rigidification 32.

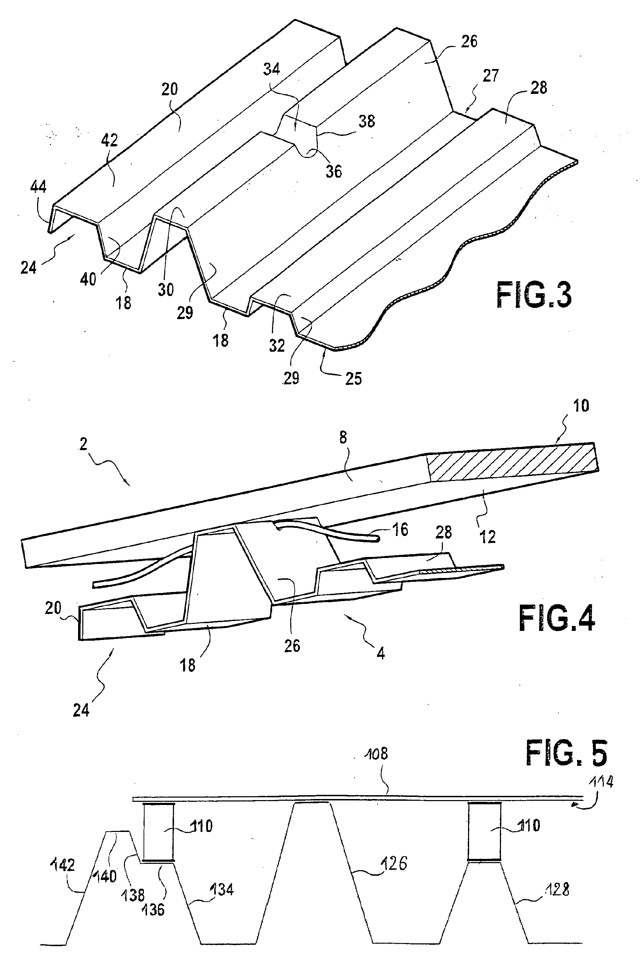

Elles diffèrent en outre par la présence d'une empreinte transversale en creux 34 sur la face supérieure des parois transversales des nervures de support. L'empreinte présente une profondeur et une largeur adaptées à recevoir un câble électrique associé à la plaque de capteur solaire. L'empreinte présente, dans le mode de réalisation illustré sur les figures 2 et 3, sur toute la largeur de la nervure de support, une section comportant un fond sphérique 36 et des parois verticales montantes 38 depuis le fond jusqu'à la paroi transversale de la nervure de support.

Les nervures de recouvrement forment un troisième type de nervures, aux extrémités latérales de la tôle. Les deux nervures de recouvrement présentent respectivement sensiblement la même forme. Elles sont formées par une paroi montante 40 qui fait saillie du plan de base de la tôle et par une paroi de recouvrement 42 qui s'étend parallèlement au plan de base dans la continuité du sommet de cette paroi montante. L'extrémité libre dé la paroi de recouvrement 44 est rabattue.

On distingue alors une première 20 et une deuxième 22 nervure de recouvrement, respectivement situées sur une première et une deuxième extrémité latérale de la tôle. Les deux nervures de recouvrement diffèrent en ce que la paroi montante de la première nervure s'étend plus loin du plan de base de la tôle que la paroi montante de la deuxième nervure, de sorte que pour une même tôle, la première nervure de recouvrement 20 est plus haute que la deuxième nervure de recouvrement 22.

Comme cela sera décrit plus en détails ci-après, on observe qu'ainsi une première nervure de recouvrement d'une tôle présente une forme adaptée pour venir recouvrir une deuxième nervure de recouvrement d'une autre tôle.

Dans le premier mode de réalisation représenté, les nervures de recouvrement de la tôle sont plus hautes que les nervures de rigidification. On observe ici que les trois types de nervures de la tôle s'étendent à des hauteurs différentes par rapport au plan de base. Les nervures de support sont les nervures les plus en saillie tandis que les nervures de rigidification sont les nervures les moins en saillie.

On va maintenant décrire l'assemblage du dispositif de couverture selon l'invention.

Un joint de colle 46 est déposé le long des faces supérieures des nervures de support amenées à supporter la plaque de capteur solaire, tout en veillant à ne pas déposer de colle dans les empreintes.

Comme cela a été décrit précédemment, les faces supérieures des nervures de support s'étendent dans un même plan, ici horizontal, au-dessus des nervures de recouvrement et des extrémités supérieures des nervures de rigidification. De la sorte, on assure un plan de fixation plat pour la plaque de capteur solaire.

On amène alors la plaque de capteur solaire à proximité de la tôle nervurée, avec la face inférieure de la plaque en regard des faces supérieures des nervures de support. Avant de plaquer la plaque contre la tôle, on ajuste la position des câbles électriques qui sortent du boîtier de sorte que ces câbles viennent reposer dans les empreintes en creux réalisées dans les nervures de support. La plaque est alors rapportée et collée sur les nervures de support.

La plaque de capteur présente une largeur et une longueur plus petites que la largeur et la longueur correspondantes de la tôle associée. La mise en place de la plaque est assurée pour que latéralement, comme cela est visible sur la figure 2, les extrémités latérales de la plaque ne recouvrent pas les nervures de recouvrement de la tôle. En outre, on s'assure que, axialement selon l'axe des nervures (comme cela est visible sur la figure 1), une extrémité de la plaque est disposée à une première distance d1 d'une première extrémité axiale 25 de la tôle, dite extrémité proximale, tandis que l'extrémité opposée de la plaque est disposée à une deuxième distance d2 de la deuxième extrémité axiale 27 de la tôle, dite extrémité distale. La deuxième distance d2 est plus grande que la première distance d1. Le décalage entre la plaque et l'extrémité proximale de la tôle forme un jeu de positionnement sur la distance d1, par exemple égal à 20 mm, qui correspond comme cela sera expliqué ci après au jeu entre deux plaques de capteurs voisines disposées l'une au-dessus de l'autre. Le décalage entre la plaque et l'extrémité distale forme un jeu de montage sur la distance d2, par exemple égal à 100 mm, qui correspond comme cela sera expliqué ci après à la distance de recouvrement axial d'une tôle sur une tôle voisine.

La dimension des empreintes est déterminée en veillant à ce que l'empreinte ne soit pas trop petite, pour éviter que le câble gêne le plaquage de la plaque en appui sur les nervures de support et en veillant à ce qu'à l'inverse, l'empreinte ne soit pas trop grande, pour éviter que ce câble ne soit mobile entre la plaque et la tôle. Avantageusement, le fond sphérique de l'empreinte présente un rayon de courbure équivalent au rayon du câble, la largeur de l'empreinte est égale au diamètre du câble et la hauteur des parois verticales montantes est égale au rayon du câble.

Lorsque le dispositif est ainsi assemblé, on observe la présence d'une chambre d'aération 48 délimitée latéralement par les deux nervures de support de la tôle et verticalement par le plan de base de la tôle et par la plaque de capteur solaire. Cet espace vide disposé sous la plaque permet le refroidissement de la plaque de capteur solaire.

La présence des nervures de support surélevées offre le double avantage de laisser la libre circulation d'air entre la plaque et la tôle et d'écarter la plaque de cette tôle. A titre d'exemple, lorsque la plaque de capteur solaire est rapportée sur les nervures de support, la plaque s'étend à une distance d'au moins 100mm du plan de base de la tôle.

On observe que si les nervures de support n'étaient pas surélevées par rapport au reste des nervures de la tôle, la circulation d'air sous la plaque de capteur depuis une nervure de support vers l'autre serait bloquée par les nervures de rigidification. La présence de ces nervures de rigidification est ici souhaitable pour rigidifier la tôle entre les nervures de support, lesquelles sont amenées à travailler sous le poids et les efforts générés par la plaque de capteur solaire collée directement sur les nervures de support.

On observe en outre, lorsque le dispositif est assemblé, que les parois planes de recouvrement des nervures de recouvrement sont plus basses que la plaque de capteur solaire. Comme cela sera décrit ci-après, ceci assure une protection des nervures de recouvrement et des moyens de fixation portés par ces nervures.

On va maintenant décrire le montage selon l'invention d'un ensemble de couverture sur le toit, dans lequel sont disposés plusieurs dispositifs de couverture.

Pour la description qui va suivre, on va décrire un ensemble de couverture formé d'un premier dispositif de couverture 2, formé d'une première tôle nervurée et d'une première plaque de capteur solaire et assemblé comme décrit précédemment, ainsi qu'un deuxième dispositif de couverture 202 et un troisième dispositif de couverture 302, formés respectivement d'une deuxième et d'une troisième tôle nervurée et d'une deuxième et d'une troisième plaque de capteur solaire. Le premier et le deuxième dispositif de couverture sont disposés côte à côte, latéralement, tandis que le premier et le troisième dispositif de couverture sont disposés l'un au-dessus de l'autre, dans l'axe des nervures.

Chaque dispositif est ici amené à l'installateur de l'ensemble de couverture sur le toit comme un bloc préalablement assemblé avec la plaque de capteur collée sur les nervures et les câbles disposés dans les empreintes. Comme cela sera décrit par la suite par un exemple de variante de réalisation suivant l'invention, le montage pourrait être réalisé d'une façon différente sans sortir du contexte de l'invention.

On fixe dans un premier temps le premier dispositif de couverture sur la structure du toit. On dispose ensuite le deuxième dispositif de couverture amené à être positionné latéralement au côté du premier dispositif. On amène à cet effet la tôle nervurée du deuxième dispositif de couverture en regard de la structure du toit, à proximité du premier dispositif dans le but de faire se chevaucher les deux dispositifs contigus. La première nervure de recouvrement du deuxième dispositif est maintenue au-dessus de la deuxième nervure de recouvrement du premier dispositif, avant d'être abaissée. On fait particulièrement attention lors de l'abaissement du deuxième dispositif à ce que l'extrémité rabattue de la première nervure de recouvrement ne heurte pas la première plaque de capteur du premier dispositif de couverture.

La première nervure de recouvrement du deuxième dispositif vient se superposer sur la deuxième nervure de recouvrement du premier dispositif. L'extrémité rabattue de la première nervure de recouvrement du deuxième dispositif vient se plaquer contre la paroi montante de la deuxième nervure de recouvrement du premier dispositif. On comprend qu'une pièce de montage non représentée peut être interposée entre les tôles pour faciliter la mise en position et la fixation d'un dispositif par rapport à l'autre.

Dans cette position assemblée, les première et deuxième plaques de capteur sont disposées en regard l'une de l'autre, laissant un passage 50 pour l'utilisateur pour atteindre la paroi plane de recouvrement du deuxième dispositif. L'utilisateur peut ainsi atteindre aisément les moyens de fixation adaptés pour la fixation des deux dispositifs l'un à l'autre au niveau des nervures de recouvrement. On comprendra que les moyens de fixation ici non représentés peuvent prendre la forme de vis et d'écrous de fixation.

Dans la position finale assemblée, illustrée sur la figure 2, on observe que les nervures de recouvrement sont plus basses que les plaques de capteur solaire et sont ainsi protégées et cachées, cette position relative assurant un apport esthétique, les moyens de fixation étant cachés, et un apport mécanique, ces moyens étant en partie à l'abri des intempéries.

Préalablement à la fixation définitive du deuxième dispositif, on connecte ensemble les câbles de connexion du premier dispositif aux câbles de connexion du deuxième dispositif, pour assurer la continuité d'un dispositif à l'autre (comme cela est visible sur la figure 2) du circuit électrique de distribution de l'énergie collectée par les plaques photovoltaïques. Il est bien entendu compris que certains des dispositifs de couverture sont reliés au circuit principal pour que l'énergie collectée par les plaques et qui est passée d'un dispositif à l'autre puisse être redistribuée dans le bâtiment ou dans le réseau électrique collectif.

On fixe alors dans un deuxième temps le troisième dispositif de couverture 302 amené à être positionné axialement au-dessus du premier dispositif de couverture 2. On amène à cet effet la tôle nervurée du troisième dispositif de couverture en regard de la structure du toit, à proximité du premier dispositif dans le but de faire se chevaucher les deux dispositifs contigus. L'extrémité proximale 325 du troisième dispositif de couverture est superposée à l'extrémité distale 27 du premier dispositif en regard, en recouvrant en totalité la tôle laissée libre par le jeu de montage dû au décalage de la tôle. L'extrémité proximale du troisième dispositif affleure de fait l'extrémité axiale de la plaque de capteur lorsque le troisième dispositif est mis en place en chevauchement du premier dispositif. Lorsque les deux dispositifs sont montés l'un par rapport à l'autre sur le toit, on assure ainsi un espace 51 entre les deux plaques de capteur, de largeur égale à la distance d1 déterminée, ce qui permet notamment de laisser échapper l'air qui est en libre circulation sous la plaque de capteur.

On va maintenant décrire un deuxième mode de réalisation de l'invention dans lequel des cales sont prévues entre la tôle nervurée et la plaque de capteur solaire.

Tel que cela est visible sur la figure 5, ce mode de réalisation diffère en ce que la plaque de capteur solaire 108 est fixée, du côté de sa face inférieure 114, à la fois sur les nervures de support 126 et sur des moyens élévateurs 110 rapportés sur la tôle nervurée. Là encore, on observe que chaque plaque de capteur solaire est disposée sans la présence intermédiaire d'un cadre comme cela peut être le cas dans des panneaux solaires classiques.

Ici, le dispositif diffère également en ce que les deux nervures de recouvrement présentent chacune une forme selon laquelle une première paroi montante 134 prolonge en saillie une plage plane et une paroi intermédiaire 136 s'étend horizontalement dans la continuité au sommet de cette première paroi montante. La paroi intermédiaire des nervures de recouvrement est avantageusement dans le même plan que les parois supérieures des nervures de rigidification 128. Une deuxième paroi montante 138 prolonge sensiblement verticalement la paroi intermédiaire jusqu'à une paroi plane de recouvrement 140 qui s'étend horizontalement au-dessus de la paroi intermédiaire. L'extrémité libre de la paroi plane de recouvrement 142 est rabattue.

De même que précédemment, on distingue alors, pour une même tôle nervurée, une première et une deuxième nervure de recouvrement, respectivement situées sur une première et sur une deuxième extrémité latérale de la tôle, les deux nervures de recouvrement différant en ce que l'extrémité rabattue se prolonge jusqu'au niveau des plages planes dans le cas de la première nervure, alors qu'elle est interrompue dans le cas de la deuxième nervure. Cette différence permet l'assemblage d'une tôle nervurée en recouvrement d'une tôle nervurée voisine, la deuxième nervure de recouvrement venant recouvrir la paroi plane de recouvrement de la première nervure correspondante, sans interférer avec la présence des moyens élévateurs sur cette première nervure.

Comme évoqué précédemment, des moyens élévateurs 10 sont interposés entre la tôle nervurée 4 et la plaque de panneau solaire 8. Ils sont régulièrement répartis sous la plaque pour supporter son poids de façon homogène.

Chaque élévateur comporte au moins une face de fixation supérieure 46 et au moins une face de fixation inférieure 48. La face de fixation supérieure est rendue solidaire de la plaque de capteur solaire, tandis que la face de fixation inférieure est fixée sur la tôle nervurée, et plus particulièrement sur les nervures de cette tôle. La face supérieure est adaptée à recevoir des joints de colle pour assurer la fixation par collage de la plaque sur l'élévateur et la face inférieure est adaptée à être collée sur les nervures de tôle par des joints de colle.

Les moyens élévateurs assurent une transmission d'efforts entre la plaque de capteur solaire et la tôle nervurée rapportée sur la structure de toit. Ce sont ici les moyens élévateurs qui permettent de gérer la dilatation de l'ensemble lorsque la souplesse de la colle s'estompe avec le temps.

L'élévateur est ici formé par une cale profilée ajourée présentant une forme en Oméga, de sorte que l'élévateur comporte une alternance de sommets qui forment les faces de fixation supérieures et de creux qui forment les faces de fixation inférieures.

Les moyens élévateurs sont disposés axialement, paralèlement aux nervures, comme visible sur la figure 5.

L'assemblage du dispositif de couverture selon ce deuxième mode de réalisation de l'invention est tel qu'on dispose un profilé sur les parois supérieures de chaque nervure de rigidification. On dispose en outre un profilé sur la paroi intermédiaire de chaque nervure de recouvrement. Les profilés sont collés sur les parois correspondantes de la tôle. A cet effet, un joint de colle est préalablement déposé le long de chaque paroi amenée à supporter un profilé, et le profilé est plaqué contre la paroi. Avantageusement, les parois intermédiaires des nervures de recouvrement et les parois supérieures des nervures de rigidification s'étendent dans un même plan horizontal. De la sorte, les faces de fixation supérieures des profilés s'étendent toutes dans le même plan et offre un plan de fixation plat pour la plaque de capteur solaire. On comprendra que pour atteindre cette caractéristique d'un plan de fixation plat, on pourrait sans sortir du contexte de l'invention présenter des parois intermédiaires plus hautes ou plus basses que les parois supérieures, et compenser ce décalage par des hauteurs de profilés associés différentes. Il importe ici que les faces de fixation supérieures des profilés soient dans le même plan que les faces supérieures des nervures de support.

On dépose des joints de colle sur les faces de fixation supérieures des moyens élévateurs et des nervures de support, puis on amène la plaque de capteur solaire à proximité de la tôle nervurée et des moyens élévateurs désormais solidaires, avec la face inférieure de la plaque en regard des faces de fixation supérieures des moyens élévateurs et des faces supérieures des nervures de support. Avant de plaquer la plaque contre les moyens élévateurs et contre les nervures de support, on ajuste la position des câbles électriques qui sortent du boîtier de sorte que ces câbles d'une part se logent dans les empreintes en creux réalisées dans les nervures support et que d'autre part ils passent à travers les profilés ajourés formant les moyens élévateurs. Afin de faciliter la lecture, le boîtier de câblage et les câbles électriques n'ont pas été représentées sur la figure 5. Les creux formés dans le profilé assurent à l'utilisateur un passage de câbles facilité. La plaque est alors rapportée et collée sur les moyens élévateurs et sur les nervures de support.

On comprend que dans ce deuxième mode de réalisation, les faces supérieures des nervures de support s'étendent dans un même plan, ici horizontal, que celui des faces supérieures des moyens élévateurs. De la sorte, on assure un plan de fixation plat pour la plaque de capteur solaire.

Les chambres d'aération disposés entre les nervures de support ne sont pas bouchées par les moyens élévateurs et l'air peut librement circuler entre la plaque et la tôle, en passant à travers le profil ajouré des moyens élévateurs. L'air n'est pas confiné dans un volume restreint sous la plaque et on ne crée ainsi pas de surchauffe de cette plaque.

La présence des moyens élévateurs ajourés offre le double avantage de laisser la libre circulation d'air entre la plaque et la tôle et d'écarter la plaque de cette tôle en offrant une position stable de la plaque.

On comprend que les moyens élévateurs du deuxième mode de réalisation pourront être disposés comme décrit précédemment à la fois sur les parois intermédiaires des nervures de recouvrement et sur les nervures de rigidification, ou bien être disposées seulement sur les unes ou sur les autres, dès lors que leurs faces supérieures offrent avec les faces supérieures de nervures de support un plan de fixation régulier pour la plaque de capteur solaire.

D'autres variantes non représentées sont prévues et certaines sont décrites ci dessous, sans toutefois que cette liste soit pour autant exhaustive :
- la tôle est solidaire d'une mousse isolante qui s'étend sous la tôle, à l'opposé de la plaque de capteur solaire. Le dispositif de couverture intègre ainsi un moyen isolant, qui pourrait dans une variante comporter du feutre, disposé d'office entre la tôle et la structure de toit lors de la fixation de la tôle ;
- les dispositifs sont placés côte à côte avec une équerre de fixation solidarisé au niveau du recouvrement des nervures et rapportée sur les bords des plaques de capteur voisines. L'équerre de fixation, en forme de U, est fixée par sa base sur la paroi plane de recouvrement de la première nervure de recouvrement du deuxième dispositif. Les branches de l'équerre sont prolongées transversalement par des ailes, et chacune d'entre elles est plaquée sur le bord d'une des deux plaques voisines pour être fixée par un joint de colle. Un jeu de montage est prévu entre la branche de l'équerre et le bord de la plaque pour permettre l'expansion de la plaque photovoltaïque lorsque le dispositif est soumis à de hautes températures ;
- un embouti est réalisé sur la paroi d'extrémité rabattue de la première nervure de recouvrement du deuxième dispositif. Cet embouti permet avantageusement d'éviter la remontée vers les moyens de fixation d'impuretés ou d'eau de pluie ;
- le montage d'un dispositif de couverture sur le toit est fait en plusieurs étapes. Pour des raisons d'encombrement lors du transport des dispositifs par exemple, la tôle nervurée et la plaque de capteur sont livrées non assemblées à l'installateur de l'ensemble de couverture.
L'installateur procède alors comme précédemment décrit en fixant les tôles nervurées sur le toit, puis colle la plaque de capteur solaire sur les nervures de la tôle lorsque celle ci est déjà en place, en prenant garde préalablement à insérer les câbles dans les empreintes. Une telle installation gardé l'avantage de nécessiter moins de manoeuvres qu'une installation d'un panneau solaire avec son cadre.

L'invention ne saurait toutefois se limiter aux modes de réalisation spécifiquement décrits dans ce document, et s'étend en particulier à tous moyens équivalents et à toute combinaison techniquement opérante de ces moyens.

## Revendications

1. Dispositif de couverture à capteur solaire, **caractérisé en ce qu'**il comporte un élément de toiture réalisé sous forme d'une tôle nervurée (4), qui présente une série de nervures longitudinales en saillie d'un plan de base de la tôle, ladite série comportant au moins deux nervures d'extrémité (20, 22) disposées sur les bords de la tôle, deux nervures de support (26) disposées entre les nervures de recouvrement et sur lesquelles une plaque de capteur solaire (8) repose et au moins une nervure de rigidification (28) disposée entre lesdites nervures de support, et **en ce que** les deux nervures de support s'étendent en saillie de façon proéminente par rapport aux autres nervures de la tôle et forment surface de fixation de ladite plaque de capteur par collage, de telle sorte que la plaque s'étend à distance des autres nervures.

2. Dispositif selon la revendication 1, **caractérisé en ce que** chaque nervure de support (26) comporte des flancs montants (29) qui prolongent en saillie le plan de base de la tôle et une paroi transversale (30) qui s'étend parallèlement au plan de base entre les extrémités en saillie des flancs montants, et **en ce que** la face supérieure de ladite paroi transversale comporte une empreinte transversale en creux (34).

3. Dispositif selon la revendication 2, **caractérisé en ce que** la plaque de capteur solaire (8) est raccordée à un circuit électrique de manière à transformer le rayonnement solaire reçu sur la plaque en de l'énergie électrique, un boîtier de câblage (14) étant disposé sous la plaque et étant apte à être raccordé par des câbles électriques (16) audit circuit électrique.

4. Dispositif selon la revendication 3, **caractérisé en ce que** l'empreinte transversale (34) présente une profondeur et une largeur adaptées à recevoir un desdits câbles électriques (16) associés à la plaque de capteur solaire (8).

5. Dispositif selon la revendication 4, **caractérisé en ce que** l'empreinte (34) présente, sur toute la largeur de la nervure de support (26), une section comportant un fond sphérique (36), qui présente un rayon de courbure équivalent au rayon du câble (16), ainsi que des parois verticales (38) dont la hauteur est égale au rayon du câble, la largeur de l'empreinte (34) étant égale au diamètre du câble.

6. Dispositif selon l'une des revendications 1 à 5, **caractérisé en ce que** chaque nervure d'extrémité (20, 22) comporte une paroi montante (40) qui prolonge verticalement le plan de base de la tôle (18) jusqu'à une paroi de recouvrement (42) qui s'étend horizontalement dans la continuité au sommet de la paroi montante et dont l'extrémité libre (44) est rabattue.

7. Dispositif selon la revendication 6, **caractérisé en ce qu'**une première nervure d'extrémité (20) est disposée à une extrémité latérale de la tôle (26) et **en ce qu'**une deuxième nervure d'extrémité (22) est disposée à l'extrémité latérale opposée de la tôle, la paroi montante de la première nervure d'extrémité s'étendant en saillie plus loin du plan de base (18) que la paroi montante de la deuxième nervure d'extrémité.

8. Dispositif selon l'une des revendications précédentes, **caractérisé en ce qu'**il comporte une chambre d'aération (48) délimitée latéralement par les deux nervures de support de la tôle (26) et verticalement par le plan de base de la tôle (18) et par la plaque de capteur solaire (8).

9. Dispositif selon l'une des revendications précédentes, **caractérisé en ce qu'**il comporte en outre des moyens élévateurs (110) collés sur des ondes en saillie de la tôle nervurée, à l'exception des nervures de support, et sur lesquels la plaque de capteur solaire est également collée directement, lesdits moyens élévateurs étant conformés pour laisser passage à de l'air en circulation sous la plaque de capteur solaire.

10. Dispositif selon la revendication 9, **caractérisé en ce que** les moyens élévateurs (110) sont formés par des cales profilées ajourées qui présentent des formes en Oméga et qui s'étendent parallèlement aux ondes.

11. Ensemble de couverture de toit par des plaques solaires **caractérisé en ce qu'**il comporte un premier dispositif de couverture (102) selon l'une des revendications 1 à 10 contigu à un deuxième dispositif de couverture (202) selon l'une des revendications 1 à 10, chaque dispositif de couverture comportant une tôle nervurée comportant au moins deux nervures de support (26) et à ses extrémités latérales des nervures d'extrémité (20, 22), avec les nervures de support surélevées par rapport aux nervures d'extrémité et sur lesquelles est collée une plaque solaire, les nervures d'extrémité formant des nervures de recouvrement adaptées à ce qu'une première nervure de recouvrement du deuxième dispositif de couverture (202) se superpose à une deuxième nervure de recouvrement du premier dispositif de couverture (102).

12. Ensemble de couverture de toit selon la revendication 11, **caractérisé en ce qu'**un passage (50) est aménagé entre deux plaques de capteur solaire contiguës pour donner accès aux nervures de recouvrement.
